# EUROPÄISCHE PATENTSCHRIFT

(11) **EP 1 807 164 B1**
(45) Veröffentlichungstag und Bekanntmachung des Hinweises auf die Patenterteilung: **08.09.2010**
(21) Anmeldenummer: 05794950.5
(22) Anmeldetag: 13.10.2005
(51) Int. Cl.: B01D 19/04

(54) **ENTSCHÄUMERZUSAMMENSETZUNGEN**
DEFOAMER COMPOSITIONS
COMPOSITIONS D'ANTIMOUSSES

(30) Priorität: 26.10.2004 DE 102004051897
(43) Veröffentlichungstag der Anmeldung: 18.07.2007
(73) Patentinhaber: Wacker Chemie AG, 81737 München (DE)
(72) Erfinder: RAUTSCHEK, Holger, 01612 Nünchritz (DE); BECKER, Richard, 84489 Burghausen (DE)
(74) Vertreter: Budczinski, Angelika
(86) Internationale Anmeldenummer: PCT/EP2005/011037
(87) Internationale Veröffentlichungsnummer: WO 2006/045445

(56) Entgegenhaltungen:
- EP-A- 0 726 086
- EP-A- 1 075 864
- EP-A- 1 618 936

## Beschreibung

Die Erfindung betrifft Zusammensetzungen, die Organosiliciumverbindungen mit direkt an das Silicium gebundenen Resten mit einer definierten Anzahl von Kohlenstoffatomen enthalten, Verfahren zu deren Herstellung und deren Verwendung als Entschäumer.

In vielen flüssigen, insbesondere wässrigen Systemen, die als erwünschte oder auch unerwünschte Bestandteile oberflächenaktive Verbindungen enthalten, können durch Schaumbildung Probleme auftreten, wenn diese Systeme in mehr oder weniger intensiven Kontakt mit gasförmigen Stoffen gebracht werden, beispielsweise beim Begasen von Abwässern, beim intensiven Rühren von Flüssigkeiten, bei Destillations-, Wasch- oder Färbeprozessen oder bei Abfüllvorgängen.

Die Bekämpfung dieses Schaumes kann auf mechanischem Wege oder durch den Zusatz von Entschäumern erfolgen. Dabei haben sich Entschäumer auf Siloxanbasis besonders bewährt. Entschäumer auf Basis von Siloxanen werden beispielsweise nach DE-AS 15 19 987 durch Erhitzen von hydrophiler Kieselsäure in Polydimethylsiloxanen hergestellt. Durch Anwendung von basischen Katalysatoren kann die Wirksamkeit derartiger Entschäumer verbessert werden, wie etwa in DE-OS 17 69 940 offenbart. Eine Alternative ist die Verteilung von hydrophobierter Kieselsäure in einem Polydimethylsiloxan, z.B. entsprechend DE-OS 29 25 722. Jedoch ist die Wirksamkeit der erhaltenen Entschäumer meist verbesserungswürdig. So beschreibt US-A 4,145,308 beispielsweise eine Entschäumerzubereitung, die neben einem Polydiorganosiloxan und Kieselsäure noch ein Copolymer aus (CH₃)₃SiO_{1/2}- und SiO₂-Bausteinen enthält. Copolymere aus (CH₃)₃SiO_{1/2}- und SiO₂-Bausteinen sollen auch in Kombination mit Siloxanen, die endständige Langalkylgruppen tragen, vorteilhaft sein, wie etwa in EP-A 301 531 beschrieben. EP-A 726 086 beschreibt Entschäumerformulierungen, die sowohl in situ hydrophobierte Kieselsäuren als auch vorbehandelte Kieselsäuren enthalten. EP-A 1 075 864 beschreibt Entschäumer mit an das Silicium direkt gebundenen aromatischen Resten. EP-A 1 618 936 beansprucht Entschäumerformulierungen, die verzweigte oder cyclische aliphatische Kohlenwasserstoffreste mit mindestens 3 Kohlenstoffatomen enthalten. Die Verwendung von anvernetzten, zum Teil bereits gummiähnlichen Polydimethylsiloxanen soll zur Steigerung der Entschäumerwirkung beitragen. Hierzu sei beispielsweise auf US-A 2,632,736, EP-A 273 448 und EP-A 434 060 verwiesen. Allerdings sind diese Produkte im Allgemeinen sehr hochviskos und schlecht handhabbar oder weiter verarbeitbar.

Meistens werden bevorzugt Polysiloxane mit Methylgruppen, wie Polydimethylsiloxane, eingesetzt. Obwohl Polymere mit einer Reihe anderer aliphatischer oder aromatischer Kohlenwasserstoffgruppen am Silicium bekannt sind und vielfach zur Herstellung von Entschäumern vorgeschlagen werden, gibt es nur wenig Hinweise darauf, dass man durch die Auswahl dieser Substituenten am Silicium eine wesentliche Verbesserung der Entschäumungswirkung erreichen kann. In EP-A 121 210 wird die Verwendung von Polysiloxanen, die Alkylgruppen mit 6-30 Kohlenstoffatomen tragen, mit der Maßgabe empfohlen, dass der Anteil an Kohlenstoff, der als CH₂-Gruppe vorliegt, 30-65% beträgt, um in Kombination mit Mineralöl hochwirksame Antischaummittel zu erhalten. In den Beispielen werden vor allem Polysiloxane mit Octadecylgruppen erwähnt. Siloxane mit Alkylgruppen mit mehr als 30 Kohlenstoffatomen in Kombination mit Aminosiloxanen sollen nach US-A 4,584,125 ebenfalls vorteilhaft für die Antischaumwirkung sein. EP-A 578 424 beansprucht Antischaummittel, die Siloxane enthalten, bei denen 40-100% der Siloxanbausteine Kohlenwasserstoffreste tragen, die 9-35 Kohlenstoffatome enthalten, wobei mehr als 70 Gewichts-% des Kohlenstoffs durch diese langen Alkylreste bedingt ist.

Die bekannten Entschäumerformulierungen weisen jedoch in stark schäumenden tensidreichen Systemen nicht immer eine ausreichend lang anhaltende Wirksamkeit auf oder sind wegen der hohen Viskosität aufgrund des erreichten Verzweigungs- oder Vernetzungsgrades schwer handhabbar.

Gegenstand der Erfindung sind Zusammensetzungen enthaltend
(A) mindestens eine Organosiliciumverbindung, welche aus Einheiten der Formel

   Rₐ(R¹O)_{b}SiO_{(4-a-b)/2} (I)

   besteht, worin
   R gleich oder verschieden sein kann und Wasserstoffatom, lineare Alkylreste wird 1 bis 18 Kohlenstoffatomen einen einwertigen, gegebenenfalls substituierten, SiC-gebundenen aliphatischen Kohlenwasserstoffrest bedeutet,
   R¹ gleich oder verschieden sein kann und ein Wasserstoffatom oder einen einwertigen, gegebenenfalls substituierten Kohlenwasserstoffrest bedeutet,
   a 0, 1, 2 oder 3 ist,
   b 0, 1, 2 oder 3 ist,
   mit der Maßgabe, dass die Summe a+b≤3 ist, in der Organosiliciumverbindung die Anzahl der Kohlenstoffatome in allen Resten R durchschnittlich 3 bis 6 ist und in mindestens 50 % aller Einheiten der Formel (I) in der Organosiliciumverbindung die Summe a+b gleich 2 ist und (A) bei 25°C eine Viskosität von 500 bis 1 000 000 mPas hat,
   sowie
(B) mindestens einen Zusatzstoff ausgewählt aus
(B1) Füllstoffpartikeln und/oder
(B2) Organopolysiloxanharz aus Einheiten der Formel

   R²_{c}(R³O)_{d}SiO_{(4-c-d)/2} (II),

   worin
   R² gleich oder verschieden sein kann und Wasserstoffatom oder einen einwertigen, gegebenenfalls substituierten, SiC-gebundenen Kohlenwasserstoffrest bedeutet,
   R³ gleich oder verschieden sein kann und ein Wasserstoffatom oder einen einwertigen, gegebenenfalls substituierten Kohlenwasserstoffrest bedeutet,
   c 0, 1, 2 oder 3 ist und
   d 0, 1, 2 oder 3 ist,
   mit der Maßgabe, dass die Summe c+d≤3 ist und in weniger als 50 % aller Einheiten der Formel (II) im Organopolysiloxanharz die Summe c+d gleich 2 ist,
   und gegebenenfalls
(C) eine Organosiliciumverbindung, welche Einheiten der Formel

   R⁴ₑ(R⁵O)_{f}SiO_{(4-e-f)/2} (III),

   aufweist, worin
   R⁴ gleich oder verschieden sein kann und Wasserstoffatom, einen einwertigen, gegebenenfalls substituierten, SiC-gebundenen Kohlenwasserstoffrest bedeutet,
   R⁵ gleich oder verschieden sein kann und ein Wasserstoffatom oder einen einwertigen, gegebenenfalls substituierten Kohlenwasserstoffrest bedeutet,
   e 0, 1, 2 oder 3 ist und
   f 0, 1, 2 oder 3 ist,
   mit der Maßgabe, dass die Summe e+f≤3 ist, in der Organosiliciumverbindung die durchschnittliche Anzahl der Kohlenstoffatome in allen aliphatischen Resten R⁴ kleiner 3 oder größer 6 ist und in mindestens 50 % aller Einheiten der Formel (III) in der Organosiliciumverbindung die Summe e+f gleich 2 ist.

Beispiele für Reste R sind Alkylreste, wie der Methyl-, Ethyl-, n-Propyl-, n-Butyl-, n-Pentyl-, n-Hexylrest, n-Heptylrest, n-Octylrest, n-Nonylrest, n-Decylrest, n-Dodecylrest und n-Octadecylrest.

Dabei handelt es sich bei Rest R um lineare Alkylreste mit 1 bis 18 Kohlenstoffatomen, besonders bevorzugt um den Methyl-, n-Hexyl-, n-Heptyl-, n-Octyl- und n-Dodecylrest, insbesondere um den Methyl-, n-Hexyl-, n-Heptyl- und n-Octylrest.

Die erfindungsgemäß eingesetzte Komponente (A) enthält bevorzugt maximal 25 Mol-%, besonders bevorzugt maximal 10 Mol-%, Reste R mit mehr als 8 Kohlenstoffatomen je Rest, jeweils bezogen auf die Gesamtzahl der Reste R pro Molekül.

Beispiele für Rest R¹ sind Wasserstoffatom und Alkylreste, wie der Methyl-, Ethyl-, n-Propyl-, n-Butyl-, n-Pentyl-, Hexylreste, wie der n-Hexylrest, Heptylreste, wie der n-Heptylrest, Octylreste, wie der n-Octylrest Nonylreste, wie der n-Nonylrest, Decylreste, wie der n-Decylrest, Dodecylreste, wie der n-Dodecylrest

Bevorzugt handelt es sich bei Rest R¹ um Wasserstoffatom oder Kohlenwasserstoffreste mit 1 bis 4 Kohlenstoffatomen, insbesondere um Methyl- oder Ethylreste.

Bevorzugt ist b gleich 0 oder 1, besonders bevorzugt 0.

Die als Komponente (A) eingesetzten siliciumorganischen Verbindungen bestehend aus Einheiten der Formel (I) sind bevorzugt verzweigte oder lineare Organopolysiloxane.

Im Rahmen der vorliegenden Erfindung sollen von dem Begriff Organopolysiloxane sowohl polymere, oligomere wie auch dimere Siloxane mitumfasst werden.

Bevorzugt handelt es sich bei der erfindungsgemäß eingesetzten Komponente (A) um im Wesentlichen lineare Organopolysiloxane der Formel

R₃Si-(O-SiR₂)ₙO-SiR₃ (IV),

wobei Reste R eine der obengenannten Bedeutungen haben und Index n, der den Polymerisationsgrad des Polysiloxans (IV) und damit die Viskosität bestimmt, im Bereich von 1 bis 10 000, bevorzugt im Bereich von 2 bis 1000, besonders bevorzugt im Bereich von 10 bis 200, liegt, mit der Maßgabe, dass im Organopolysiloxan die Anzahl der Kohlenstoffatome in allen Resten R durchschnittlich 3 bis 6 ist.

Obwohl in Formel (IV) nicht angegeben, können diese Organopolysiloxane bis zu 10 Molprozent, bezogen auf die Summe aller Siloxaneinheiten, anderer Siloxaneinheiten, wie ≡SiO_{1/2}-, -SiO_{3/2}- und SiO_{4/2}-Einheiten, enthalten.

Vorzugsweise haben weniger als 5 Mol-%, insbesondere weniger als 1 Mol-%, der Reste R, jeweils bezogen auf die Summe der Reste R in Formel (IV), die Bedeutung von Wasserstoffatom.

Es ist für die Erfindung wesentlich, dass die Reste R so gewählt werden, dass die durchschnittliche Anzahl an Kohlenstoffatomen in diesen Resten R in den Bausteinen der Formel (I), in Formel (IV) bzw. in Formel (V) 3 bis 6, bevorzugt 3,5 bis 5,5, besonders bevorzugt 3,8 bis 5,0, ist. Dabei kann es sich um eine Art von Resten z.B. um Butylreste oder Pentylreste handeln, oder um Mischungen aus zwei oder mehr verschiedenen Resten, z.B. aus Methyl- und Octylresten oder aus Methyl-, Hexyl- und Octadecylresten.

Besonders bevorzugt handelt es sich bei der erfindungsgemäß eingesetzten Komponente (A) um im Wesentlichen lineare Organopolysiloxane der Formel

R'(CH₃)₂Si-(O-Si(CH₃)R')ₒ-(O-Si(CH₃)₂)ₚ -O-Si(CH₃)₂R' (V),

wobei die Summe o+p eine für n oben angegebene Bedeutung hat und R' gleich oder verschieden sein kann und Wasserstoffatom oder n-Alkylreste mit 1-18 Kohlenstoffatomen bedeutet,
mit der Maßgabe, dass im Organopolysiloxan die Anzahl der Kohlenstoffatome in allen SiC-gebundenen Resten durchschnittlich 3 bis 6 ist.

Beispiele für die erfindungsgemäße Komponente (A) sind
Oct-Me₂Si-O-[SiMeOct-O]₃₅-SiMe2-Oct (4,4),
Me₃Si-O-[SiMe₂-O-]₁₀-[SiMeOct-O]₅₀-SiMe₃ (3,8),
Me₃Si-O-[simeHex-O]₆₀-siMe₃ (3,4)
Me₃Si-O-[SiMeoct-O]₆₀-SiMe₃ (4,3)
Me₃Si-O-[SiMe₂-O-]₄₀-[SiMeDd-O]₃₆-SiMe₃ (3,5),
Me₃Si-O-[SiMe₂-O-]₄₀-[SiMeHex-O]₂₀-(SiMeOd-O]₂₀-SiMe₃ (3,6),
Me₃Si-O-[SiMeHex-O]₄₀-[SiMeOd-O]₂₀-SiMe₃ (5,3),
Me₃Si-O-[SiMeHex-O]₉₀-[SiMeDd-O]₂₀-SiMe₃ (4,3),
wobei Me gleich Methylrest, Hex gleich n-Hexylrest, Oct gleich n-Octyl-, Dd gleich Dodecyl- und Od gleich Octadecylrest bedeuten und in Klammern die durchschnittliche Anzahl an Kohlenstoffatomen je SiC-gebundenem Rest angeben ist.

Die erfindungsgemäßen Organosiliciumverbindungen (A) haben eine Viskosität von bevorzugt 10 bis 1 000 000 mPas, besonders bevorzugt von 50 bis 50 000 mPas, insbesondere von 500 bis 5 000 mPas, jeweils gemessen bei 25°C.

Die Herstellung der Organosiliciumverbindungen (A) kann nach beliebigen, in der siliciumorganischen Chemie bisher bekannten Methoden erfolgen, wie z.B. durch Cohydrolyse der entsprechenden Silane. Insbesondere die Organopolysiloxane der Formel (V) werden vorzugsweise durch Hydrosilylierungsreaktion der entsprechenden Si-gebundenen Wasserstoff enthaltenden Organosiliciumverbindungen mit Olefinen hergestellt. Bei der Hydrosilylierung werden Organosiliciumverbindungen mit Si-gebundem Wasserstoff (1) mit den entsprechenden aliphatisch ungesättigten Verbindungen (2), wie z.B. Ethylen, Propylen, 1-Hexen, 1-Octen, 1-Dodecen, 1-Hexadecen und 1-Octadecen, in Gegenwart von die Anlagerung von Si-gebundenem Wasserstoff an aliphatische Mehrfachbindung (Hydrosilylierung) fördernden Katalysatoren (3), wie z.B. Metalle aus der Gruppe der Platinmetalle oder um Verbindungen oder Komplexe aus der Gruppe der Platinmetalle, nach bekannten Verfahren umgesetzt.

Die erfindungsgemäßen Zusammensetzungen enthalten Zusatzstoff (B) in Mengen von bevorzugt 0,1 bis 30 Gewichtsteilen, besonders bevorzugt 1 bis 15 Gewichtsteilen, jeweils bezogen auf 100 Gewichtsteile Komponente (A).

Als erfindungsgemäß eingesetzten Zusatzstoff (B) kann es sich ausschließlich um Komponente (B1), ausschließlich um Komponente (B2) oder eine Mischung aus Komponenten (B1) und (B2) handeln, wobei letzteres bevorzugt ist.

Bei der Komponente (B1) handelt es sich bevorzugt um pulverförmige, vorzugsweise hydrophobe, Füllstoffe.

Vorzugsweise weist Komponente (B1) eine BET-Oberfläche von 20 bis 1000 m²/g, eine Partikelgröße von weniger als 10 µm und eine Agglomeratgröße von weniger als 100 µm auf.

Beispiele für die Komponente (B1) sind Siliciumdioxid (Kieselsäuren), Titandioxid, Aluminiumoxid, Metallseifen, Quarzmehl, PTFE-Pulver, Fettsäureamide z.B. Ethylenbisstearamid, fein verteilte hydrophobe Polyurethane.

Vorzugsweise werden als Komponente (B1) Siliciumdioxid (Kieselsäuren), Titandioxid oder Alumiumoxid mit einer BET-Oberfläche von 20 bis 1000 m²/g, einer Partikelgröße von weniger als 10 µm und einer Agglomeratgröße von weniger als 100 µm eingestzt.

Besonders bevorzugt als Komponente (B1) sind Kieselsäuren, insbesondere solche mit einer BET-Oberfläche von 50 bis 800 m²/g. Diese Kieselsäuren können pyrogene oder gefällte Kieselsäuren sein. Es sind als Komponente (B1) sowohl vorbehandelte Kieselsäuren einsetzbar, also handelsübliche hydrophobe Kieselsäuren, als auch hydrophile Kieselsäuren. Beispiele für handelsübliche hydrophobe Kieselsäuren, die erfindungsgemäß eingesetzt werden können, sind HDK^{®} H2000, eine pyrogene mit Hexamethyldisilazane behandelte Kieselsäure mit einer BET-Oberfläche von 140 m²/g (käuflich erhältlich bei der Wacker-Chemie GmbH, Deutschland) und eine gefällte mit Polydimethlsiloxan behandelte Kieselsäure mit einer BET-Oberfläche von 90 m²/g (käuflich erhältlich unter der Bezeichnung "Sipernat D10" bei der Degussa AG, Deutschland).

Falls als Komponente (B1) hydrophobe Kieselsäuren eingesetzt werden sollen, können hydrophile Kieselsäuren auch in situ hydrophobiert werden, wenn das für die gewünschte Wirksamkeit der Entschäumerformulierung vorteilhaft ist. Verfahren zur Hydrophobierung von Kieselsäuren sind vielfach bekannt. Die in situ Hydrophobierung der hydrophilen Kieselsäure kann dabei z.B. durch mehrstündiges Erhitzen der in der Komponente (A) oder in einer Mischung aus (A) und (C) dispergierten Kieselsäure auf Temperaturen von 100 bis 200°C erfolgen. Dabei kann die Reaktion durch den Zusatz von Katalysatoren, wie KOH, und von Hydrophobiermitteln, wie kurzkettigen OH-terminierten Polydimethylsiloxanen, Silanen oder Silazanen unterstützt werden. Diese Behandlung ist auch beim Einsatz von handelsüblichen hydrophoben Kieselsäuren möglich und kann zur Wirksamkeitsverbesserung beitragen.

Eine weitere Möglichkeit ist die Verwendung einer Kombination von in situ hydrophobierten Kieselsäuren mit handelsüblichen hydrophoben Kieselsäuren.

Beispiele für Rest R² sind die für Rest R¹ angegebenen Reste.

Bevorzugt handelt es sich bei Rest R² um gegebenenfalls substituierte Kohlenwasserstoffreste mit 1 bis 30 Kohlenstoffatomen, besonders bevorzugt um Kohlenwasserstoffreste mit 1 bis 6 Kohlenstoffatomen, insbesondere um den Methylrest.

Beispiele für Rest R³ sind die für den Rest R¹ angegebenen Reste.

Bevorzugt handelt es sich bei Rest R³ um Wasserstoffatom oder um Kohlenwasserstoffreste mit 1 bis 4 Kohlenstoffatomen, insbesondere um Wasserstoffatom, Methyl- oder Ethylreste.

Bevorzugt ist der Wert für c gleich 3 oder 0.

Bei der erfindungsgemäß gegebenenfalls eingesetzten Komponente (B2) handelt es sich bevorzugt um Siliconharze aus Einheiten der Formel (II), bei denen in weniger als 30%, bevorzugt in weniger als 5%, der Einheiten im Harz die Summe c+d gleich 2 ist. Besonders bevorzugt handelt es sich bei Komponente (B2) um Organopolysiloxanharze, die im Wesentlichen aus R²₃SiO_{1/2} (M)- und SiO_{4/2}(Q)-Einheiten bestehen mit R² gleich der obengenannten Bedeutung; diese Harze werden auch als MQ-Harze bezeichnet. Das molare Verhältnis von M- zu Q-Einheiten liegt vorzugsweise im Bereich von 0,5 bis 2,0, besonders bevorzugt im Bereich von 0,6 bis 1,0. Diese Siliconharze können außerdem bis zu 10 Gew.-% freie Hydroxy- oder Alkoxygruppen enthalten.

Vorzugsweise haben diese Organopolysiloxanharze (B2) bei 25°C eine Viskosität größer 1000 mPas oder sind Feststoffe. Das mit Gelpermeationschromatografie bestimmte gewichtsmittlere Molekulargewicht (bezogen auf einen Polystyrolstandard) dieser Harze beträgt vorzugsweise 200 bis 200 000 g/mol, insbesondere 1000 bis 20 000 g/mol.

Komponente (B2) sind handelsübliche Produkte bzw. können nach in der Siliciumchemie gängigen Verfahren z.B. entsprechend "Parsonage, J. R.; Kendrick, D. A. (Science of Materials and Polymers Group, University of Greenwich, London, UK SE18 6PF) Spec. Publ. - R. Soc. Chem. 166, 98-106, 1995", US-A 2,676,182 oder EP-A 927 733 hergestellt werden.

Falls es sich bei dem erfindungsgemäß eingesetzten Zusatzstoff (B) um eine Mischung aus Komponenten (B1) und (B2) handelt, ist das Gewichtsverhältnis von (B1) zu (B2) in der Mischung bevorzugt 0,01 bis 50, besonders bevorzugt aus 0,1 bis 7.

Beispiele für Reste R⁴ sind die für Rest R¹ angegebenen Beispiele.

Bevorzugt handelt es sich bei Rest R⁴ um Wasserstoffatom oder gegebenenfalls substituierte Kohlenwasserstoffreste mit 1 bis 30 Kohlenstoffatomen, besonders bevorzugt um Kohlenwasserstoffreste mit 1 bis 4 Kohlenstoffatomen, insbesondere um den Methylrest.

Beispiele für Rest R⁵ sind die für Rest R¹ angegebenen Reste.

Bevorzugt handelt es sich bei Rest R⁵ um Wasserstoffatom oder gegebenenfalls substituierte Kohlenwasserstoffreste mit 1 bis 30 Kohlenstoffatomen, besonders bevorzugt um Wasserstoffatom oder Kohlenwasserstoffreste mit 1 bis 4 Kohlenstoffatomen, insbesondere um Methyl- oder Ethylreste.

Der Wert von e ist bevorzugt 1, 2 oder 3.

Der Wert von f ist bevorzugt 0 oder 1.

Die gegebenenfalls eingesetzten Organopolysiloxane (C) haben eine Viskosität von bevorzugt 10 bis 1 000 000 mm²/s bei 25°C.

Beispiele für erfindungsgemäß gegebenenfalls eingesetzte Komponente (C) sind grunsätzlich alle Organosiliciumverbindungen, die unterschiedlich zu Komponente (A) bzw. Komponente (B2) sind, wie z.B. Methylpolysiloxane, wie etwa Polydimethylsiloxane mit Viskositäten von 100 bis 1 000 000 mPa·s bei 25°C. Diese Polydimethylsiloxane können z.B. durch den Einbau von R⁴SiO_{3/2}- oder SiO_{4/2}-Einheiten bis maximal 5% aller Einheiten verzweigt sein. Diese verzweigten oder anvernetzten Siloxane weisen dann viskoelastische Eigenschaften auf.

Bevorzugt handelt es sich bei der gegebenenfalls eingesetzten Komponente (C) um im Wesentlichen lineare Organopolysiloxane enthaltend Einheiten der Formel (III), besonders bevorzugt um Polydimethylsiloxane, die mit Silanolgruppen und/oder mit Alkoxygruppen und/oder mit Trimethylsiloxygruppen terminiert sein können, oder um Siloxane mit Alkoxygruppen oder Siloxane mit Polyethergruppen. Derartige polyethermodifizierte Polysiloxane sind bekannt und z.B. in EP-A 1076073 beschrieben.

Eine weitere bevorzugte Gruppe von Verbindungen, die als Komponente (C) eingesetzt werden kann, sind Organosiliciumverbindungen enthaltend Bausteine der allgemeinen Formel (III), worin R⁴ einen Methylrest und R⁵ einen linearen und/oder verzweigten Kohlenwasserstoffrest mit mindestens 6 Kohlenstoffatomen bedeuten, f einen durchschnittlichen Wert von 0,005 bis 0,5 annimmt und die Summe (e+f) einen durchschnittlichen Wert von 1,9 bis 2,1 hat. Derartige Produkte sind beispielsweise durch alkalisch katalysierte Kondensation von silanolterminierten Polydimethylsiloxanen einer Viskosität 50 bis 50 000 mPa·s bei 25°C und aliphatischen Alkoholen mit mehr als 6 Kohlenstoffatomen, wie Isotridecylalkohol, n-Octanol, Stearylalkohol, 4-Ethyl-hexadecanol oder Eicosanol, zugänglich.

Falls die erfindungsgemäßen Zusammensetzungen Komponente (C) enthalten, handelt es sich um Mengen von bevorzugt 1 bis 900 Gewichtsteile, besonders bevorzugt 2 bis 100 Gewichtsteile, insbesondere, 2 bis 10 Gewichtsteile, jeweils bezogen auf 100 Gewichtsteile der Komponente (A).

Komponente (C) sind handelsübliche Produkte bzw. können nach in der Siliciumchemie gängigen Verfahren hergestellt werden.

Außer den Komponenten (A), (B) und gegebenenfalls (C) können die erfindungsgemäßen Zusammensetzungen alle weiteren Stoffe enthalten, wie sie auch bisher in Entschäumerformulierungen verwendet worden sind, wie z.B. wasserunlösliche organische Verbindungen (D).

Unter dem Begriff "wasserunlöslich" soll im Sinne der vorliegenden Erfindung eine Löslichkeit in Wasser bei 25°C und einem

Druck von 101,325 hPa von maximal 3 Gewichtsprozent verstanden werden.

Bei der gegebenenfalls eingesetzten Komponente (D) handelt es sich vorzugsweise um wasserunlösliche organische Verbindungen mit einem Siedepunkt größer als 100°C bei dem Druck der umgebenden Atmosphäre, also bei 900 bis 1100 hPa, insbesondere um solche, ausgewählt aus Mineralölen, nativen Ölen, Isoparaffinen, Polyisobutylenen, Rückständen aus der Oxoalkoholsynthese, Estern niedermolekularer synthetischer Carbonsäuren, Fettsäureestern, wie z.B. Octylstearat, Dodecylpalmitat, Fettalkoholen, Ethern niedermolekularer Alkohole, Phthalaten, Estern der Phosphorsäure und Wachsen.

Die erfindungsgemäßen Zusammensetzungen enthalten wasserunlösliche organische Verbindung (D) in Mengen von bevorzugt 0 bis 1000 Gewichtsteilen, besonders bevorzugt 0 bis 100 Gewichtsteilen, jeweils bezogen auf 100 Gewichtsteile des Gesamtgewichts der Komponenten (A), (B) und gegebenenfalls (C).

Bei den im erfindungsgemäßen Verfahren eingesetzten Komponenten kann es sich jeweils um eine Art einer solchen Komponente wie auch um ein Gemisch aus mindestens zwei Arten einer jeweiligen Komponente handeln.

Bevorzugt handelt es sich bei den erfindungsgemäßen Zusammensetzungen um solche, die
(A) mindestens eine Organosiliciumverbindung der Formel (IV),
(B) mindestens einen Zusatzstoff ausgewählt aus
(B1) Füllstoffpartikeln und/oder
(B2) Organopolysiloxanharz aus Einheiten der Formel (II),
   gegebenenfalls
(C) Organosiliciumverbindungen enthaltend Einheiten der Formel (III) und
   gegebenenfalls
(D) wasserunlösliche organische Verbindung
   enthalten.

Besonders bevorzugt handelt es sich bei den erfindungsgemäßen Zusammensetzungen um solche, die aus
(A) 100 Gewichtsteilen einer Organosiliciumverbindung der Formel (IV),
(B) 0,1 bis 30 Gewichtsteilen eines Zusatzstoffs ausgewählt aus
(B1) Füllstoffpartikeln und/oder
(B2) Organopolysiloxanharz aus Einheiten der Formel (II),
   gegebenenfalls
(C) Organosiliciumverbindungen enthaltend Einheiten der Formel (III) und
   gegebenenfalls
(D) wasserunlöslicher organischer Verbindung
   bestehen.

Die erfindungsgemäßen Zusammensetzungen sind bevorzugt viskose klare bis opake farblose bis bräunliche Flüssigkeiten.

Die erfindungsgemäßen Zusammensetzungen haben eine Viskosität von vorzugsweise 100 bis 2 000 000 mPas, besonders bevorzugt von 500 bis 50 000 mPas, insbesondere von 1 000 bis 10 000 mPas, jeweils bei 25°C.

Bei den erfindungsgemäßen Zusammensetzungen kann es sich um Lösungen, Dispersionen oder Pulver handeln.

Das Herstellen der erfindungsgemäßen Zusammensetzungen kann nach bekannten Verfahren, wie z.B. durch Mischen aller Komponenten erfolgen, wie z.B. unter Anwendung von hohen Scherkräften in Kolloidmühlen, Dissolvern oder Rotor-Stator-Homogenisatoren. Dabei kann der Mischvorgang bei reduziertem Druck erfolgen, um das Einmischen von Luft, welche z.B. in hochdispersen Füllstoffen enthalten ist, zu verhindern. Im Anschluss kann bei Bedarf die in situ Hydrophobierung der Füllstoffe erfolgen.

Falls es sich bei den erfindungsgemäßen Zusammensetzungen um Emulsionen handelt, können alle Emulgatoren eingesetzt werden, die dem Fachmann zur Herstellung von Siliconemulsionen bekannt sind, wie z.B. anionische, kationische oder nichtionogene Emulgatoren. Bevorzugt werden Emulgatormischungen eingesetzt, wobei mindestens ein nichtionogener Emulgator, wie beispielsweise Sorbitanfettsäureestern, ethoxylierten Sorbitanfettsäureestern, ethoxylierten Fettsäuren, ethoxylierten linearen oder verzweigten Alkoholen mit 10 bis 20 Kohlenstoffatomen und/oder Glycerinestern, enthalten sein sollte. Weiterhin können als Verdicker bekannte Verbindungen, wie Polyacrylsäure, Polyacrylate, Celluloseether wie Carboxymethylcellulose und Hydroxyethylcellulose, natürliche Gume wie Xanthan Gum und Polyurethane sowie Konservierungsmittel und andere übliche und dem Fachmann bekannte Zusätze zugesetzt werden.

Die kontinuierliche Phase der erfindungsgemäßen Emulsionen ist bevorzugt Wasser. Es können jedoch auch erfindungsgemäße Zusammensetzungen in Form von Emulsionen hergestellt werden, bei denen die kontinuierliche Phase durch die Komponenten (A), (B) und gegebenenfalls (C) gebildet oder durch Komponente (D) gebildet wird. Es kann sich dabei auch um multiple Emulsionen handeln.

Verfahren zur Herstellung von Siliconemulsionen sind bekannt. Üblicherweise erfolgt die Herstellung durch einfaches Verrühren aller Bestandteile und ggf. anschließendes Homogenisieren mit Strahldispergatoren, Rotor-Stator-Homogenisatoren, Kolloidmühlen oder Hochdruckhomogenisatoren.

Falls es sich bei der erfindungsgemäßen Zusammensetzung um Emulsionen handelt, sind Öl in Wasser Emulsionen enthaltend 5 bis 50 Gew.-% Komponenten (A) bis (D), 1 bis 20 Gew.-% Emulgatoren und Verdicker und 30 bis 94 Gew.-% Wasser bevorzugt.

Die erfindungsgemäßen Zusammensetzungen können auch als frei fließende Pulver formuliert werden. Diese sind z.B. bei der Anwendung in pulverförmigen Waschmitteln bevorzugt. Die Herstellung dieser Pulver ausgehend von der Mischung der Komponenten (A), (B), gegebenenfalls (C) und gegebenenfalls (D) erfolgt nach dem Fachmann bekannten Verfahren, wie Sprühtrocknung oder Aufbaugranulation und mit dem Fachmann bekannten Zusätzen.

Die erfindungsgemäßen Pulver enthalten bevorzugt 2 bis 20 Gewichts-% Komponenten (A) bis (D). Als Träger kommen z.B. Zeolithe, Natriumsulfat, Cellulosederivate, Harnstoff und Zucker zum Einsatz. Weitere Bestandteile der erfindungsgemäßen Pulver können z.B. Wachse sein oder organischen Polymere, wie sie z.B. in EP-A 887097 und EP-A 1060778 beschrieben sind.

Ein weiterer Gegenstand der vorliegenden Erfindung sind Wasch- und Reinigungsmittel, enthaltend die erfindungsgemäßen Zusammensetzungen.

Die erfindungsgemäßen Zusammensetzungen können überall eingesetzt werden, wo Zusammensetzungen auf der Basis von Organosiliciumverbindungen auch bisher eingesetzt wurden. Insbesondere können sie als Entschäumer eingesetzt werden.

Ein weiterer Gegenstand der vorliegenden Erfindung ist ein Verfahren zum Entschäumen und/oder Schaumverhinderung von Medien, **dadurch gekennzeichnet, dass** die erfindungsgemäße Zusammensetzung mit dem Medium vermischt wird.

Überraschenderweise wurde gefunden, dass die Wirksamkeit der erfindungsgemäßen Zusammensetzungen dann am besten ist, wenn in der Komponente (A) eine definierte durchschnittliche Anzahl von Kohlenstoffatomen in den SiC-gebundenen aliphatischen Resten enthalten ist ohne dass die Größe der einzelnen SiC-gebundenen Reste einen wesentlichen Einfluss hat oder besonders lange Alkylreste vorteilhaft sind.

Der Zusatz der erfindungsgemäßen Zusammensetzung zu den schäumenden Medien kann direkt erfolgen, in geeigneten Lösungsmitteln, wie Toluol, Xylol, Methylethylketon oder t-Butanol, gelöst, als Pulver oder als Emulsion. Die zur Erzielung der gewünschten Entschäumerwirkung notwendige Menge richtet sich z.B. nach der Art des Mediums, der Temperatur und der auftretenden Turbulenz.

Bevorzugt werden die erfindungsgemäßen Zusammensetzungen in Mengen von 0,1 Gew.-ppm bis 1 Gew.-%, insbesondere in Mengen von 1 bis 100 Gew.-ppm, zum schäumenden Medium zugegeben.

Das erfindungsgemäße Verfahren wird bei Temperaturen von bevorzugt -10 bis +150°C, besonders bevorzugt 5 bis 100°C, und dem Druck der umgebenden Atmosphäre, also etwa 900 bis 1100 hPa, durchgeführt. Das erfindungsgemäße Verfahren kann auch bei höheren oder niedrigeren Drücken durchgeführt werden, wie etwa bei 3000 bis 4000 hPa oder 1 bis 10 hPa.

Die erfindungsgemäßen Entschäumerzusammensetzungen können überall dort eingesetzt werden, wo störender Schaum unterdrückt werden soll. Das ist z.B. in nichtwässrigen Systemen wie bei der Teerdestillation oder der Erdölverarbeitung der Fall. Insbesondere eigenen sich die erfindungsgemäßen Entschäumerzusammensetzungen zur Bekämpfung von Schaum in wässrigen Tensidsystemen, die Anwendung in Wasch- und Reinigungsmitteln, die Bekämpfung von Schaum in Abwasseranlagen, bei Textilfärbeverfahren, bei der Erdgaswäsche, in Polymerdispersionen, und zum Entschäumen von bei der Zellstoffherstellung anfallenden wässrigen Medien

Die erfindungsgemäßen Zusammensetzungen haben den Vorteil, dass sie als Entschäumer leicht handhabbar sind, und dass sie sich durch eine hohe, lang anhaltende Wirksamkeit in unterschiedlichsten Medien bei geringen Zusatzmengen auszeichnen. Das ist sowohl ökonomisch als auch ökologisch außerordentlich vorteilhaft.

Die erfindungsgemäßen Zusammensetzungen haben den Vorteil, dass sie auch in Medien verwendet werden können, die z.B. als Lacke oder Klebstoffe eingesetzt werden sollen.

Das erfindungsgemäße Verfahren hat den Vorteil, dass es einfach in der Durchführung und sehr wirtschaftlich ist.

In den nachfolgenden Beispielen beziehen sich alle Angaben von Teilen und Prozentsätzen, soweit nicht anders angegeben, auf das Gewicht. Sofern nicht anders angegeben, werden die folgenden Beispiele bei einem Druck der umgebenden Atmosphäre, also bei etwa 1000 hPa, und bei Raumtemperatur, also etwa 20°C bzw. einer Temperatur, die sich beim Zusammengeben der Reaktanten bei Raumtemperatur ohne zusätzliche Heizung oder Kühlung einstellt, durchgeführt. Alle in den Beispielen angeführten Viskositätsangaben sollen sich auf eine Temperatur von 25°C beziehen.

Im Folgenden werden die Abkürzungen Me gleich Methylrest, Oct gleich n-Octylrest, Dd Dodecylrest, Hd gleich Hexadecylrest und Hex gleich n-Hexylrest verwendet.

### Prüfungen der Entschäumerwirksamkeit

### 1. Antischaumkennzahl AKZ

In einer Vorrichtung entsprechend DE-A 25 51 260 werden 200 ml einer 4 Gew.-%igen wässrigen Lösung eines Natriumalkylsulfonates (Mersolat), die 10 mg des zu untersuchenden Entschäumers (gelöst in der 10-fachen Menge an Methyl-Ethyl-Keton) enthält, 1 Minute mit zwei gegenläufigen Rührern aufgeschäumt. Anschließend wir der Schaumzerfall aufgezeichnet. Aus der Fläche der Auftragung Schaumhöhe gegen die Zeit wird die Antischaumkennzahl berechnet. Je niedriger diese Zahl ist, desto wirksamer ist der Entschäumer.

### 2. Rührtest

Test A) 300 ml einer Lösung, die 1 Gew.-% eines entschäumerfreien Waschpulvers enthält, wurden 5 Minuten mit einem Rührer bei einer Geschwindigkeit von 1000 Umdrehungen/min aufgeschäumt. Anschließend wurden 100 µl einer 10 Gew.-%igen Lösung des Entschäumers in Methylethylketon zugegeben und das Rühren weitere 25 Minuten fortgesetzt. Während der gesamten Zeit wird die Schaumhöhe aufgezeichnet.
Als Maß für die Wirksamkeit wird die durchschnittliche Schaumhöhe bezogen auf die Schaumhöhe ohne Entschäumer nach 2-3 Minuten berechnet. Je niedriger dieser Wert ist, desto wirksamer ist der Entschäumer.
Test B) wie Test A aber anstelle des Waschpulvers wird ein nichtionogenes Netzmittel erhältlich bei der SASOL Deutschland GmbH Hamburg unter dem Namen Marlipal NE 40 verwendet.

### 3. Test in der Waschmaschine mit einem pulverförmigen Waschmittel

Zu 100 g des entschäumerfreien Waschpulvers wurden 0,1 g Entschäumer gegeben. Das Waschpulver wurde dann gemeinsam mit 3500 g sauberer Baumwollwäsche in eine Trommelwaschmaschine (Typ Miele Novotronik W918 ohne Fuzzy Logic) gegeben. Anschließend wird das Waschprogramm gestartet und die Schaumhöhe über einen Zeitraum von 55 Minuten aufgezeichnet. Aus den über den Gesamtzeitraum ermittelten Schaumnoten (0 kein Schaum messbar bis 6 Überschäumen) wird die durchschnittliche Schaumnote bestimmt. Je niedriger diese ist, desto wirksamer ist der Entschäumer über den gesamten Zeitraum.

### 4. Test in der Waschmaschine mit einem Flüssigwaschmittel

Zu 180 g eines entschäumerfreien Flüssigwaschmittels wurden 0,03 g Entschäumer gegeben. Das Waschmittel wurde dann gemeinsam mit 3500 g sauberer Baumwollwäsche in eine Trommelwaschmaschine (Typ Miele Novotronik W918 ohne Fuzzy Logic) gegeben. Anschließend wird das Waschprogramm (bei 40°C) gestartet und die Schaumhöhe über einen Zeitraum von 55 Minuten aufgezeichnet. Aus den über den Gesamtzeitraum ermittelten Schaumnoten (0 kein Schaum messbar bis 6 Überschäumen) wird die durchschnittliche Schaumnote bestimmt. Je niedriger diese ist, desto wirksamer ist der Entschäumer über den gesamten Zeitraum.

### Herstellung der Organosiliciumverbindungen A1 bis A5 und VA1 und VA3

### A1: 62 g eines Polysiloxans der Formel

Me₃Si-O-[MeHsi-O-]₄₇[SiMe₂-O]₁₃-SiMe₃, wobei die einzelnen Einheiten statistisch im Molekül verteilt sind, werden mit 100 g Octen in Gegenwart von 0,5 g Platinkatalysator (Platin-1,3-Divinyl-1,1,3,3-tetramethyldisiloxan-Komplex nach Karstedt mit einem Gehalt von 1 Gew.-% Platin) bei Temperaturen zwischen 60 und 80°C umgesetzt. Nach Abtrennen der flüchtigen Bestandteile der Reaktionsmischung wurden 183 g eines klaren Öles mit eine Viskosität von 572 mPas erhalten. Nach der ²⁹Si-NMR-Analyse hatte dieses Öl folgende Struktur:
Me₃Si-O-[MeHSi-O-]₁-[MeOctSi-O-]₄₆[SiMe₂-O]₁₃-SiMe₃.

### A2: 65 g eines Polysiloxans der Formel

Me₃Si-O-[MeHSi-O-]₆₀-SiMe₃ werden in Gegenwart von 0,5 g Platinkatalysator (Platin-1,3-Divinyl-1,1,3,3-tetramethyldisiloxan-Komplex nach Karstedt mit einem Gehalt von 1 Gew.-% Platin) bei Temperaturen zwischen 60 und 80°C mit 101 g n-Hexen umgesetzt. Nach Filtration und Abtrennen der flüchtigen Bestandteile der Reaktionsmischung wurden 149 g eines klaren Öles mit eine Viskosität von 572 mPas erhalten. Nach der ²⁹Si-NMR-Analyse hatte dieses Öl folgende Struktur:
Me₃Si-O-[SiMeHex-O]₆₀₋SiMe_{3.}

Nach analogen Verfahren wurden folgende Organosiliciumverbindungen hergestellt:
**A3:** Me₃Si-O-[SiMeOct-O-]₆₀-SiMe₃ (Viskosität 906 mPas),
**A4:** Me₃Si-O-[SiMeDd-O-]₃₀[SiMeOHex-O]₃₀-SiMe₃ (Viskosität 570 mPas), wobei die einzelnen Einheiten statistisch im Molekül verteilt sind;
**A5:** Me₃Si-O-[SiMeDd-O-]₃₀[SiMeOct-O]₃₀-SiMe₃ (Viskosität 570 mPas), wobei die einzelnen Einheiten statistisch im Molekül verteilt sind;
**VA1:** Me₃Si-O-[SiMe₂-O-]₃₈[SiMeOct-O]₄₀-SiMe₃ (Viskosität 464 mPas), wobei die einzelnen Einheiten statistisch im Molekül verteilt sind;
**VA2:** Me₃Si-O-[SiMeHd-O-]₃₀[SiMeOct-O]₃₀-SiMe₃ (Viskosität 415 mPas), wobei die einzelnen Einheiten statistisch im Molekül verteilt sind; und
**VA3:** Me₃Si-O-[SiMeDd-O-]₆₀-SiMe₃ (Viskosität 966 mPas), wobei diese Organosiliciumverbindung dem Polyorganosiloxan 2 in EP-A 578424 entspricht.

### Beispiele 1 bis 5

90 Teile der in Tabelle 3 beschriebenen Organosilciumverbindung, 5 Teile einer pyrogenen Kieselsäure mit einer BET-Oberfläche von 400 m²/g, käuflich erhältlich bei der Wacker-Chemie GmbH unter der Bezeichnung HDK® T40, 5 Teile von bei Raumtemperatur festem Siliconharz bestehend aus (nach ²⁹Si-NMR und IR-Analyse) 40 mol-% (CH₃)₃SiO_{1/2}-, 50 mol-% SiO_{4/2}-, 8 mol-% C₂H₅OSiO_{3/2}- und 2 mol-% HOSiO_{3/2}-Einheiten mit einer gewichtsmittleren Molmasse von 7900 g/mol (bezogen auf Polystyrolstandard) werden mit einem Dissolver vermischt und in Gegenwart von 1500 ppm KOH (als 20%ige Lösung in Methanol) 4 Stunden auf 150°C erhitzt und nach Abkühlen noch mal mit dem Dissolver homogenisiert. Es werden in allen Fällen Entschäumerformulierungen mit den in Tabelle 1 angegebenen Viskositäten erhalten.

Die so erhaltenen Zusammensetzungen wurden nun hinsichtlich der Antischaumkennzahl AKZ, des Rührtests und des Tests in der Waschmaschine überprüft. Die Ergebnisse dieser Tests sind in Tabelle 1 zusammengefasst.

### Beispiel 6

90 Teile der oben beschriebenen Organosiliciumverbindung A3 und 10 Teile eines bei Raumtemperatur festen Siliconharzes bestehend aus (nach ²⁹Si-NMR und IR-Analyse) 40 mol-% (CH₃)₃SiO_{1/2}-, 50 mol-% SiO_{4/2}-, 8 mol-% C₂H₅OSiO_{3/2}- und 2 mol-% HOSiO_{3/2}-Einheiten mit einer gewichtsmittleren Molmasse von 7900 g/mol (bezogen auf Polystyrolstandard) werden mit einem Dissolver vermischt und in Gegenwart von 1500 ppm KOH (als 20%ige Lösung in Methanol) 4 Stunden auf 150°C erhitzt und nach Abkühlen noch mal mit dem Dissolver homogenisiert. Es wird eine Entschäumerformulierung mit der in Tabelle 1 angegebenen Viskosität erhalten.

Die so erhaltene Zusammensetzung wurde nun hinsichtlich der Antischaumkennzahl AKZ, des Rührtests und des Tests in der Waschmaschine überprüft. Die Ergebnisse dieser Tests sind in Tabelle 1 zusammengefasst.

### Vergleichsbeispiel 1 (V1)

Eine Entschäumergrundlage wird durch Vermischen von 2,5 Teilen eines Kondensationsproduktes mit einer Viskosität von 180 mPas hergestellt aus Octyldodecanol und einem mit Silanolgruppen terminierten Polydimethylsiloxan mit einer Viskosität von 40 mPas und 5 Teilen einer 50%-igen toluolischen Lösung eines Siliconharzes aus 40 mol-% Trimethylsiloxygruppen und 60 mol% SiO_{4/2}-Gruppen und anschließendem Entfernen der flüchtigen Bestandteile hergestellt.

Eine Mischung aus 89,3 Gewichtsteilen eines Trimethylsiloxygruppen terminierten Polydimethylsiloxans mit einer Viskosität von 1000 mPas bei 25°C (erhältlich bei der Wacker-Chemie GmbH, Deutschland unter der Bezeichnung "Siliconöl AK 5000"), 5 Gewichtsteilen der oben beschriebenen Entschäumergrundlage, 5 Teilen hydrophiler pyrogener Kieselsäure mit einer BET-Oberfläche von 300 m²/g (erhältlich bei der Wacker-Chemie GmbH, Deutschland unter der Bezeichnung HDK® T30) und 0,7 Gewichtsteilen einer methanolischen KOH werden 2 Stunden bei 150°C erhitzt. Es wurde ein Antischaummittel mit einer Viskosität von 25600 mPas erhalten.

Die so erhaltene Zusammensetzung wurde nun hinsichtlich der Antischaumkennzahl AKZ, des Rührtests und des Tests in der Waschmaschine überprüft. Die Ergebnisse dieser Tests sind in Tabelle 1 zusammengefasst.

### Vergleichsbeispiel 2 (V2)

Ein verzweigtes Polyorganosiloxan wird durch die Umsetzung von 378 g eines mit Trimethylsiloxygruppen terminierten Polydimethylsiloxans mit einer Viskosität von 1000 mPas bei 25°C (erhältlich bei der Wacker-Chemie GmbH, Deutschland unter der Bezeichnung "Siliconöl AK 1000"), 180 g eines mit Silanolgruppen terminierten Polydimethylsiloxans mit einer Viskosität von 10000 mPas bei 25°C (erhältlich bei der Wacker-Chemie GmbH, Deutschland unter der Bezeichnung "Polymer FD 10") und 18 g E-thylsilicat (erhältlich bei der Wacker-Chemie GmbH, Deutschland unter der Bezeichnung "SILIKAT TES 40") in Gegenwart von 0,3 g KOH durch Erhitzen auf 140°C hergestellt. Anschließend werden 30 g einer hydrophilen pyrogenen Kieselsäure mit einer BET-Oberfläche von 200 m²/g (erhältlich bei der Wacker-Chemie GmbH, Deutschland unter der Bezeichnung HDK® N20) und 30 g eines mit Silanolgruppen terminierten Polydimethylsiloxans mit einer Viskosität von 40 mPas zugegeben, und die Mischung wird weitere 4 Stunden auf 180°C erhitzt und bei 50 hPa von flüchtigen Bestandteilen befreit. Es wurde eine viskose farblose Entschäumerformulierung mit einer Viskosität von 68640 mPas erhalten.

Die so erhaltene Zusammensetzung wurde nun hinsichtlich der Antischaumkennzahl AKZ, des Rührtests und des Tests in der Waschmaschine überprüft. Die Ergebnisse dieser Tests sind in Tabelle 1 zusammengefasst.

### Vergleichsbeispiele 3 bis 5 (V3 bis V5)

Die in den Beispielen 1 bis 5 beschriebe Arbeitsweise wird wiederholt mit der Abänderung, dass anstelle der Organosiliciumverbindungen A die Organosiliciumverbindungen VA1 bis VA3 eingesetzt wurden.

Die so erhaltenen Zusammensetzungen wurden nun hinsichtlich der Antischaumkennzahl AKZ, des Rührtests und des Tests in der Waschmaschine überprüft. Die Ergebnisse dieser Tests sind in Tabelle 1 zusammengefasst.

**Tabelle 1**

| Beispiel | Organosiliciumverbindung | Durchschnittliche Anzahl an C-Atomen der SiC-gebundenen Reste | Viskosität in mPas | AKZ | Rührtest Test A) in % | Rührtest Test B) in % | Durchschnittliche Schaumnote |
|---|---|---|---|---|---|---|---|
| V1 | PDMS | 1 | 25600 | 682 | 58 | | 3,3¹⁾ |
| | | | | | | | 4,9²⁾ |
| V2 | PDMS | 1 | 68640 | 1612 | 75 | | 4,4¹⁾ |
| V3 | VA1 | 2,8 | 7200 | 52 | 71 | 103 | 4,8¹⁾ |
| V4 | VA2 | 6,2 | 7200 | 1545 | 68 | | 4,9¹⁾ |
| V5 | VA3 | 6,2 | 3590 | 1458 | 41 | 84 | 4,1¹⁾ |
| 1 | Al | 3,6 | 4080 | 60 | 30 | 55 | 1,5¹⁾ |
| 2 | A2 | 3,4 | 1900 | 65 | 58 | | 3,4¹⁾ |
| 3 | A3 | 4,3 | 5440 | 87 | 38 | 53 | 0,2¹⁾ |
| | | | | | | | 1,3²⁾ |
| 4 | A4 | 4,8 | 2600 | 187 | 39 | | 3,9¹⁾ |
| 5 | A5 | 5,3 | 3200 | 817 | 43 | 49 | 2,6¹⁾ |
| 6 | A3 | 4,3 | 1440 | 497 | 55 | | 4,2¹⁾ |

| | | | | | | | |
|---|---|---|---|---|---|---|---|
| Waschmaschinentest: ¹⁾ mit pulverförmigem Waschmittel, ²⁾ mit Flüssigwaschmittel; | | | | | | | |

Bei den Vergleichversuchen V1 bis V5 kam es im Verlauf der Prüfung in der Waschmaschine zu einem Überlaufen der Waschflotte. Die Antischaummittel gemäß den Beispielen 1 bis 6 zeigen in der Langzeitwirkung beim Rührtest und in der Waschmaschine hervorragende Ergebnisse.

### Beispiel 7

86 Teile Me₃Si-O- [SiMeOct-O]₅₀-SiMe₃ (die an das Silicium gebundenen Reste enthalten durchschnittlich 3,6 Kohlenstoffatome) mit einer Viskosität von 1108 mPas, 4 Teile einer pyrogenen Kieselsäure mit einer BET-Oberfläche von 200 m²/g, (erhältlich bei der Wacker-Chemie GmbH unter der Bezeichnung HDK® N20) und 4 Teile eines bei Raumtemperatur festen Siliconharzes bestehend aus (nach ²⁹Si-NMR und IR-Analyse) 40 mol-% (CH₃)₃SiO_{1/2}-, 50 mol-% SiO_{4/2}-, 8 mol-% C₂H₅OSiO_{3/2}- und 2 mol-% HOSiO_{3/2}-Einheiten mit einer gewichtsmittleren Molmasse von 7900 g/mol und 6 Teile eines Polydimethylsiloxans mit α,ω-endständigen Alkoxygruppen der Formel CH₃(CH₂)₁₉-O- und einer Viskosität von 100 mPas werden in Gegenwart von 1500 ppm KOH 4 Stunden auf 150°C erhitzt.

Es werden 100 Teile einer Entschäumerformulierung mit einer Viskosität von 8200 mPas erhalten. Die werden bei 60°C mit 30 Teilen Sobitanmonstearat (erhältlich unter der Bezeichnung "Span 60" bei Uniqema D-Emmerich) und 20 Teilen Polyoxyethylen(20)sorbitanmonostearate (erhältlich unter der Bezeichnung "Tween 60" bei Uniqema D-Emmerich) vermischt und schrittweise mit 500 Teilen Wasser verdünnt. Zu dieser Mischung werden 2 Teile einer Polyacrylsäure (erhältlich unter der Bezeichnung "Carbopol 934" bei BF Goodrich D-Neuss) gegeben, vermischt und weitere 345 Teile Wasser und 3 Teile eines Konservierungsmittels auf Isothiazolinonbasis (erhältlich unter der Bezeichnung "Acticide MV" bei der Thor-Chemie, D-Speyer) zugegeben. Anschließend wird die Emulsion bei 100 bar mit einem Hochdruckhomogenisator homogenisiert und mit 10%iger NaOH auf einen pH-Wert von 6-7 eingestellt.
Die erhaltene Entschäumeremulsion war hervorragend geeignet, um wässrige Polymerdispersionen zu entschäumen. Diese Polymerdispersionen weisen bei der Anwendung in Dispersionsfarben keine Verlaufsstörungen auf.

### Beispiel 8

84 Teile Me₃Si-O-[MeOctSi-O-]₄₇[SiMe₂-O]₁₃-SiMe₃ (die an das Silizium gebundenen Reste enthalten durchschnittlich 3,6 Kohlenstoffatome, die Viskosität beträgt 572 mPas), wobei die einzelnen Einheiten statistisch im Molekül verteilt sein können, 3 Teile einer pyrogenen Kieselsäure mit einer BET-Oberfläche von 300 m²/g, (erhältlich bei der Wacker-Chemie GmbH unter der Bezeichnung HOK® T30) und 5 Teile eines bei Raumtemperatur festen Siliconharzes bestehend aus (nach ²⁹Si-NMR und IR-Analyse) 40 mol-% (CH₃)₃SiO_{1/2}-, 50 mol-% SiO_{4/2}, 8 mol-% C₂H₅OSiO_{3/2}- und 2 mol-% HOSiO_{3/2}-Einheiten mit einer gewichtsmittleren Molmasse von 7900 g/mol werden in Gegenwart von 1500 ppm KOH 4 Stunden auf 150°C erhitzt. Anschließend werden 5 Teile einer mit Polydimethylsiloxan vorbehandelten Kieselsäure mit einer BET-Oberfläche von 90 m²/g und einer mittleren Teilchengröße von 5 µm (käuflich erhältlich bei Degussa AG, Deutschland unter der Bezeichnung SIPERNAT® D10) zugegeben und die Mischung mit einer Dissolverscheibe homogenisiert. Der erhaltene Entschäumer hatte eine Viskosität von 4080 mPas.

35 ml einer 2 %igen Lösung eines hochmolekularen Copolymers aus Acrylsäure, Methacrylsäurestearat und Pentaerythritoldiallylether (im molaren Verhältnis 100:2:0,3) (die, wenn sie neutralsiert wird, eine Viskosität von 17 500 mm²/s aufweist) wurden in einem Becherglas vorgelegt, und unter intensivem Mischen mit einem Flügelrührer wurden 10 g der obengennanten Entschäumerformulierung langsam zugegeben, so dass nach 10 Minuten Rühren eine Emulsion der Entschäumerformulierung in der Polymerlösung vorlag. Unter fortgesetztem Rühren wurden zu dieser Emulsion 88,5 g leichte Soda gegeben und anschließend das Wasser unter fortgesetztem Mischen unter Vakuum entfernt. Danach wurden 0,5 g einer hydrophilen Kieselsäure mit einer BET-Oberfläche von 200 m²/g (erhältlich bei der Wacker-Chemie GmbH unter der Bezeichnung HDK® N20) zugemischt.
Es wurde ein weißes, rieselfähiges Pulver erhalten. Dieses wurde mit Erfolg zur Schaumverhinderung in pulverförmigen Waschmitteln oder in pulverförmigen Pflanzenschutzkonzentraten eingesetzt.

## Patentansprüche

1. Zusammensetzungen enthaltend
(A) mindestens eine Organosiliciumverbindung, welche aus Einheiten der Formel
Rₐ(R¹O)_{b}SiO_{(4-a-b)/2} (I)
besteht, worin
R gleich oder verschieden sein kann und Wasserstoffatom, lineare Alkylreste mit 1 bis 18 Kohlenstoffatomen bedeutet,
R¹ gleich oder verschieden sein kann und ein Wasserstoffatom oder einen einwertigen, gegebenenfalls substituierten Kohlenwasserstoffrest bedeutet,
a 0, 1, 2 oder 3 ist,
b 0, 1, 2 oder 3 ist,
mit der Maßgabe, dass die Summe a+b≤3 ist, in der Organosiliciumverbindung die Anzahl der Kohlenstoffatome in allen Resten R durchschnittlich 3 bis 6 ist, in mindestens 50 % aller Einheiten der Formel (I) in der Organosiliciumverbindung die Summe a+b gleich 2 ist und (A) bei 25°C eine Viskositat von 500 bis 1 000 000 mPas hat, sowie
(B) mindestens einen Zusatzstoff ausgewählt aus
(B1) Füllstoffpartikeln und/oder
(B2) Organopolysiloxanharz aus Einheiten der Formel
R²_{c}(R³O)_{d}SiO_{(4-c-d)/2} (II),
worin
R² gleich oder verschieden sein kann und Wasserstoffatom oder einen einwertigen, gegebenenfalls substituierten, SiC-gebundenen Kohlenwasserstoffrest bedeutet,
R³ gleich oder verschieden sein kann und ein Wasserstoffatom oder einen einwertigen, gegebenenfalls substituierten Kohlenwasserstoffrest bedeutet,
c 0, 1, 2 oder 3 ist und
d 0, 1, 2 oder 3 ist,
mit der Maßgabe, dass die Summe c+d≤3 ist und in weniger als 50 % aller Einheiten der Formel (II) im Organopolysiloxanharz die Summe c+d gleich 2 ist,
und gegebenenfalls
(C) eine Organosiliciumverbindung, welche Einheiten der Formel
R⁴ₑ(R⁵O)_{f}SiO_{(4-e-f)/2} (III),
aufweist, worin
R⁴ gleich oder verschieden sein kann und Wasserstoffatom, einen einwertigen, gegebenenfalls substituierten, SiC-gebundenen Kohlenwasserstoffrest bedeutet,
R⁵ gleich oder verschieden sein kann und ein Wasserstoffatom oder einen einwertigen, gegebenenfalls substituierten Kohlenwasserstoffrest bedeutet,
e 0, 1, 2 oder 3 ist und
f 0, 1, 2 oder 3 ist,
mit der Maßgabe, dass die Summe e+f≤3 ist, in der Organosiliciumverbindung die durchschnittliche Anzahl der Kohlenstoffatome in allen aliphatischen Resten R⁴ kleiner 3 oder größer 6 ist und in mindestens 50 % aller Einheiten der Formel (III) in der Organosiliciumverbindung die Summe e+f gleich 2 ist.

2. Zusammensetzungen gemäß Anspruch 1, **dadurch gekennzeichnet, dass** es sich bei Komponente (A) um im Wesentlichen lineare Organopolysiloxane der Formel
R₃Si-(O-SiR₂)ₙO-SiR₃ (IV)
handelt, wobei Reste R eine der oben genannten Bedeutungen haben und Index n, der den Polymerisationsgrad des Polysiloxans (IV) und damit die Viskosität bestimmt, im Bereich von 1 bis 10 000, bevorzugt im Bereich von 2 bis 1000, besonders bevorzugt im Bereich von 10 bis 200, liegt, mit der Maßgabe, dass im Organopolysiloxan die Anzahl der Kohlenstoffatome in allen Resten R durchschnittlich 3 bis 6 ist.

3. Zusammensetzungen gemäß Anspruch 1 oder 2, **dadurch gekennzeichnet, dass** es sich bei Komponente (A) um im Wesentlichen lineare Organopolysiloxane der Formel
R'(CH₃)₂Si-(O-Si(CH₃)R')ₒ-(O-Si(CH₃)₂)ₚ-O-Si(CH₃)₂R' (V),
wobei die Summe o+p eine für n oben angegebene Bedeutung hat und R' gleich oder verschieden sein kann und Wasserstoffatom oder n-Alkylreste mit 1-18 Kohlenstoffatomen bedeutet,
mit der Maßgabe, dass im Organopolysiloxan die Anzahl der Kohlenstoffatome in allen SiC-gebundenen Resten durchschnittlich 3 bis 6 ist.

4. Zusammensetzungen gemäß einem oder mehreren der Ansprüche 1 bis 3, **dadurch gekennzeichnet, dass** Zusatzstoff (B) in Mengen von 0,1 bis 30 Gewichtsteilen, bezogen auf 100 Gewichtsteile Komponente (A), enthalten ist.

5. Zusammensetzungen gemäß einem oder mehreren der Ansprüche 1 bis 4, **dadurch gekennzeichnet, dass** es sich bei Zusatzstoff (B) um eine Mischung aus Komponenten (B1) und (B2) handelt.

6. Zusammensetzungen gemäß einem oder mehreren der Ansprüche 1 bis 5, **dadurch gekennzeichnet, dass** es sich um solche handelt, die
(A) mindestens eine Organosiliciumverbindung der Formel (IV),
(B) mindestens einen Zusatzstoff ausgewählt aus
(B1) Füllstoffpartikeln und/oder
(B2) Organopolysiloxanharz aus Einheiten der Formel (II), gegebenenfalls
(C) Organosiliciumverbindungen enthaltend Einheiten der Formel (III) und
gegebenenfalls
(D) wasserunlösliche organische Verbindung
enthalten.

7. Wasch- und Reinigungsmittel, enthaltend Zusammensetzungen gemäß einem oder mehreren der Ansprüche 1 bis 6.

8. Verfahren zum Entschäumen und/oder Schaumverhinderung von Medien, **dadurch gekennzeichnet, dass** die Zusammensetzung gemäß einem oder mehreren der Ansprüche 1 bis 6 mit dem Medium vermischt wird.

9. Verfahren nach Anspruch 8, **dadurch gekennzeichnet, dass** die Zusammensetzung in Mengen von 0,1 Gew.-ppm bis 1 Gew.-% zum schäumenden Medium zugegeben wird.

## Claims

1. Compositions comprising
(A) at least one organosilicon compound which consists of units of the formula
Rₐ(R¹O)_{b}SiO_{(4-a-b)/2} (I)
in which
R can be identical or different and denotes hydrogen atom, linear alkyl radicals having 1 to 18 carbon atoms,
R¹ can be identical or different and denotes a hydrogen atom or a monovalent, optionally substituted hydrocarbon radical,
a is 0, 1, 2 or 3,
b is 0, 1, 2 or 3,
with the proviso that the sum a+b≤3, in the organosilicon compound the number of the carbon atoms in all radicals R is on average 3 to 6, in at least 50% of all of the units of the formula (I) in the organosilicon compound the sum a+b is 2, and (A) at 25°C has a viscosity of 500 to 1 000 000 mPas,
and also
(B) at least one additive selected from
(B1) filler particles and/or
(B2) organopolysiloxane resin made up of units of the formula
R²_{c}(R³O)_{d}SiO_{(4-c-d)/2} (II)
in which
R² can be identical or different and denotes hydrogen atom or a monovalent, optionally substituted, SiC-bonded hydrocarbon radical,
R³ can be identical or different and denotes a hydrogen atom or a monovalent, optionally substituted hydrocarbon radical,
c is 0, 1, 2 or 3 and
d is 0, 1, 2 or 3,
with the proviso that the sum c+d≤3 and in less than 50% of all of the units of the formula (II) in the organopolysiloxane resin the sum c+d is 2,
and optionally
(C) an organosilicon compound which has units of the formula
R⁴ₑ(R⁵O)_{f}SiO_{(4-e-f)/2} (III)
in which
R⁴ can be identical or different and denotes hydrogen atom, a monovalent, optionally substituted, SiC-bonded hydrocarbon radical,
R⁵ can be identical or different and denotes a hydrogen atom or a monovalent, optionally substituted hydrocarbon radical,
e is 0, 1, 2 or 3 and
f is 0, 1, 2 or 3,
with the proviso that the sum e+f≤3, in the organosilicon compound the average number of the carbon atoms in all aliphatic radicals R⁴ is less than 3 or greater than 6 and in at least 50% of all of the units of the formula (III) in the organosilicon compound the sum e+f is 2.

2. Compositions according to Claim 1, **characterized in that** component (A) comprises substantially linear organopolysiloxanes of the formula
R₃Si-(O-SiR₂)ₙO-SiR₃ (IV)
where radicals R have one of the above definitions and index n, which defines the degree of polymerization of the polysiloxane (IV) and thus the viscosity, is in the range from 1 to 10 000, preferably in the range from 2 to 1000, more preferably in the range from 10 to 200, with the proviso that in the organopolysiloxane the number of carbon atoms in all radicals R is on average 3 to 6.

3. Compositions according to Claim 1 or 2, **characterized in that** component (A) comprises substantially linear organopolysiloxanes of the formula
R'(CH₃)₂Si-(O-Si(CH₃)R')ₒ-(O-Si(CH₃)₂)ₚ-O-Si(CH₃)₂R' (V)
where the sum o+p has a definition given for n above, and R' can be identical or different and denotes hydrogen atom or n-alkyl radicals having 1-18 carbon atoms, with the proviso that in the organopolysiloxane the number of carbon atoms in all SiC-bonded radicals is on average 3 to 6.

4. Compositions according to one or more of Claims 1 to 3, **characterized in that** additive (B) is present in amounts of 0.1 to 30 parts by weight, based on 100 parts by weight of component (A).

5. Compositions according to one or more of Claims 1 to 4, **characterized in that** additive (B) comprises a mixture of components (B1) and (B2).

6. Compositions according to one or more of Claims 1 to 5, **characterized in that** they are those which comprise
(A) at least one organosilicon compound of the formula (IV),
(B) at least one additive selected from
(B1) filler particles and/or
(B2) organopolysiloxane resin made up of units of the formula (II),
optionally
(C) organosilicon compounds containing units of the formula (III), and
optionally
(D) water-insoluble organic compound.

7. Detergents comprising compositions according to one or more of Claims 1 to 6.

8. Method of defoaming media and/or preventing foam therein, **characterized in that** the composition according to one or more of Claims 1 to 6 is mixed with the medium.

9. Method according to Claim 8, **characterized in that** the composition is added in amounts of 0.1 ppm by weight to 1% by weight to the foaming medium.

## Revendications

1. Compositions contenant
(A) au moins un composé organosilicié, qui est constitué d'unités de formule
Rₐ(R¹O)_{b}SiO_{(4-a-b)/2} (I)
dans laquelle
R peut être le même ou différent et représente un atome d'hydrogène, des radicaux alkyle linéaires ayant de 1 à 18 atomes de carbone,
R¹ peut être le même ou différent et représente un atome d'hydrogène ou un radical hydrocarboné monovalent, éventuellement substitué,
a est 0, 1, 2 ou 3,
b est 0, 1, 2 ou 3,
étant entendu que la somme a+b est ≤ 3, dans le composé organosilicié le nombre des atomes de carbone dans tous les radicaux R vaut en moyenne de 3 à 6, dans au moins 50 % de toutes les unités de formule (I) dans le composé organosilicié la somme a+b est égale à 2 et (A) présente à 25 °C une viscosité de 500 à 1 000 000 mPa.s,
ainsi que
(B) au moins un additif choisi parmi
(B1) des particules de charges et/ou
(B2) une résine organopolysiloxane à base d'unités de formule
R²_{c}(R³O)_{d}SiO_{(4-c-d)/2} (II)
dans laquelle
R² peut être le même ou différent et représente un atome d'hydrogène ou un radical hydrocarboné monovalent, éventuellement substitué, lié par une liaison SiC,
R³ peut être le même ou différent et représente un atome d'hydrogène ou un radical hydrocarboné monovalent, éventuellement substitué,
c est 0, 1, 2 ou 3 et
d est 0, 1, 2 ou 3,
étant entendu que la somme c+d est ≤ 3 et que dans moins de 50 % de toutes les unités de formule (II) dans la résine organopolysiloxane la somme c+d est égale à 2,
et éventuellement
(C) un composé organosilicié qui comporte des unités de formule
R⁴ₑ(R⁵O)_{f}SiO_{(4-e-f)/2} (III)
dans laquelle
R⁴ peut être le même ou différent et représente un atome d'hydrogène, un radical hydrocarboné monovalent, éventuellement substitué, lié par une liaison SiC,
R⁵ peut être le même ou différent et représente un atome d'hydrogène ou un radical hydrocarboné monovalent, éventuellement substitué,
e est 0, 1, 2 ou 3 et
f est 0, 1, 2 ou 3,
étant entendu que la somme e+f est ≤ 3, dans le composé organosilicié le nombre moyen des atomes de carbone dans tous les radicaux aliphatiques R⁴ est inférieur à 3 ou supérieur à 6 et dans au moins 50 % de toutes les unités de formule (III) dans le composé organosilicié la somme e+f est égale à 2.

2. Compositions selon la revendication 1, **caractérisées en ce que** le composant (A) consiste essentiellement en des organopolysiloxanes linéaires de formule
R₃Si-(O-SiR₂)ₙO-SiR₃ (IV)
dans laquelle les radicaux R ont l'une des significations indiquées plus haut et l'indice n, qui détermine le degré de polymérisation du polysiloxane (IV) et donc la viscosité, se situe dans la plage allant de 1 à 10 000, de préférence dans la plage allant de 2 à 1 000, de façon particulièrement préférée dans la plage allant de 10 à 200, étant entendu que dans l'organopolysiloxane le nombre des atomes de carbone dans tous les radicaux R vaut en moyenne de 3 à 6.

3. Compositions selon la revendication 1 ou 2, **caractérisées en ce que** le composant (A) consiste essentiellement en des organopolysiloxanes linéaires de formule
R'(CH₃)₂Si-(O-Si(CH₃)R')ₒ-(O-Si(CH₃)₂)ₚ-O-Si(CH₃)₂R' (V),
dans laquelle la somme o+p a une signification indiquée plus haut pour n et R' peut être le même ou différent et représente un atome d'hydrogène ou des radicaux n-alkyle ayant de 1 à 18 atomes de carbone,
étant entendu que dans l'organopolysiloxane le nombre des atomes de carbone dans tous les radicaux liés par une liaison SiC vaut en moyenne de 3 à 6.

4. Compositions selon une ou plusieurs des revendications 1 à 3, **caractérisées en ce que** l'additif (B) est contenu en des quantités allant de 0,1 à 30 parties en poids, par rapport à 100 parties en poids du composant (A).

5. Compositions selon une ou plusieurs des revendications 1 à 4, **caractérisées en ce que** l'additif (B) consiste en un mélange de composants (B1) et (B2).

6. Compositions selon une ou plusieurs des revendications 1 à 5, **caractérisées en ce qu'**il s'agit de compositions qui contiennent
(A) au moins un composé organosilicié de formule (IV),
(B) au moins un additif choisi parmi
(B1) des particules de charges et/ou
(B2) une résine organopolysiloxane à base d'unités de formule (II),
éventuellement
(C) des composés organosiliciés contenant des unités de formule (III) et
éventuellement
(D) un composé organique insoluble dans l'eau.

7. Produits de lavage et de nettoyage, contenant des compositions selon une ou plusieurs des revendications 1 à 6.

8. Procédé pour l'élimination de mousse et/ou l'empêchement de la formation de mousse de milieux, **caractérisé en ce que** la composition selon une ou plusieurs des revendications 1 à 6 est mélangée avec le milieu.

9. Procédé selon la revendication 8, **caractérisé en ce que** la composition est ajoutée en des quantités de 0,1 ppm en poids à 1 % en poids au milieu moussant.
